# EUROPEAN PATENT APPLICATION

(11) **EP 4 456 203 A1**
(43) Date of publication of application: **30.10.2024**
(21) Application number: 24165636.2
(22) Date of filing: 22.03.2024
(51) Int. Cl.: H01M 4/66, H01M 4/04, H01M 4/36, H01M 4/62, H01M 10/052, H01M 4/02, H01M 4/38, H01M 4/134

(54) **ANODE AND LITHIUM BATTERY INCLUDING THE SAME**

(30) Priority: 24.03.2023 KR 20230039277
(71) Applicant: Samsung SDI Co., Ltd., Yongin-si, Gyeonggi-do 17084 (KR); Daegu Gyeongbuk Institute of Science and Technology, Dalseong-gun, Gyeonggi-do 42988 (KR)
(72) Inventor: Park, Jongseok, 17084 Yongin-si, Gyeonggi-do (KR); Moon, Jongseok, 17084 Yongin-si, Gyeonggi-do (KR); Lee, Kanghee, 17084 Yongin-si, Gyeonggi-do (KR); Bae, Woojin, 17084 Yongin-si, Gyeonggi-do (KR); Kim, Heemin, 17084 Yongin-si, Gyeonggi-do (KR); Woo, Hyunsik, 17084 Yongin-si, Gyeonggi-do (KR); Park, Jinhwan, 17084 Yongin-si, Gyeonggi-do (KR); Lee, Hongkyung, 42988 Dalseong-gun, Daegu (KR); Seo, Jiyeon, 42988 Dalseong-gun, Daegu (KR)
(74) Representative: Michalski Hüttermann & Partner Patentanwälte mbB

(57) **Abstract**

Provided are an anode and a lithium battery including the same. The anode includes an anode current collector and an anode interlayer on one surface of the anode current collector, and a protective layer on one surface of the anode interlayer, wherein the protective layer includes a first polymer and a second polymer, wherein the first polymer includes a strength-enhanced polymer, and the second polymer includes an ion-conductive polymer, and the anode interlayer includes a mixture of first particles and second particles, wherein the first particles contain a lithiophilic metal, and the second particles contain a carbon material.

## Description

### CROSS-REFERENCE TO RELATED APPLICATION

The present application claims priority to and the benefit of Korean Patent Application No. 10-2023-0039277, filed on March 24, 2023, in the Korean Intellectual Property Office, the entire disclosure of which is incorporated herein by reference herein.

### BACKGROUND

### 1. Field

One or more embodiments of the present disclosure relate to an anode and a lithium battery including the same.

### 2. Description of the Related Art

Current commercially available lithium batteries mainly use anode active materials such as graphite. Carbon-based anode active materials do not (or substantially do not) change in volume during charging and discharging, and thus the stability of lithium batteries is high. The theoretical electric capacity of graphite is as small as 372 mAh/g.

As an anode, an anode that does not include an anode active material layer may be used. In an anode that is free of an anode active material layer, a lithium layer may be formed on the surface of a current collector during charging and discharging. In some embodiments, if the lithium layer is not uniformly formed on the surface of the current collector, lithium dendrites are formed and the dendrites grow, causing a short circuit between the cathode and the anode. As a result, the lifespan characteristics of a lithium battery including an anode that is free of an anode active material layer may deteriorate.

Accordingly, it is desirable to develop a method for improving the lifespan characteristics of a lithium battery including an anode that is free of an anode active material layer.

### SUMMARY

One or more embodiments include an anode having a novel structure.

One or more embodiments include a lithium battery including an anode having a new structure.

Additional aspects of embodiments will be set forth in part in the description which follows and, in part, will be apparent from the description, or may be learned by practice of the presented embodiments of the present disclosure.

According to one or more embodiments, an anode includes:
an anode current collector,
an anode interlayer on one surface of the anode current collector, and
a protective layer on one surface of the anode interlayer, wherein:
the protective layer includes a first polymer and a second polymer, the first polymer includes a strength-enhanced polymer, and the second polymer includes an ion-conductive polymer, and
the anode interlayer includes a mixture of first particles including a lithiophilic metal and second particles including carbon material.

According to one or more embodiments,
a lithium battery includes a cathode, the anode, and an electrolyte between the cathode and the anode wherein the electrolyte is a liquid electrolyte, a solid electrolyte, a gel electrolyte, or a combination thereof.

### BRIEF DESCRIPTION OF THE DRAWINGS

The above and other aspects and features of certain embodiments of the present disclosure will be more apparent from the following description taken in conjunction with the accompanying drawings, in which:
FIG. 1 is a cross-sectional view of an anode according to embodiments;
FIG. 2 is a cross-sectional view of an anode according to embodiments;
FIG. 3 is a schematic diagram of a lithium battery according to embodiments;
FIG. 4 is a schematic diagram of a lithium battery according to embodiments;
FIG. 5 is a schematic diagram of a lithium battery according to embodiments;
FIG. 6 is a scanning electron microscope (SEM) image of a cross section of an anode manufactured in Example 1; and
FIGS. 7-8 are graphs illustrating the results of charge and discharge experiments for Example 1 and Comparative Example 1.

### DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," if preceding a list of elements, modify the entire list of elements and do not modify the individual elements of the list.

During the charging and discharging process of a lithium battery that includes a protective layer and an anode current collector and uses an anode that is free of the anode active material layer, a metal layer containing lithium is electrodeposited and dissolved between the anode current collector and the protective layer. As the lithium battery is repeatedly charged and discharged, the lithium-containing metal layer includes impurities remaining in the electrode, decomposition products of the electrolyte, and/or the like. Therefore, the inclusion of these impurities makes the surface of the lithium-containing metal layer rough and hard. The formation of a lithium dendrite on the lithium-containing metal layer with such a rough surface may induce perforation of the protective layer, and the decrease in adhesion between the lithium-containing metal layer and the protective layer may cause electrolyte to enter between the protective layer and the lithium-containing metal layer, thereby resulting in delamination of the protective layer. As the lithium battery is repeatedly charged and discharged, the electrolyte is substantially continuously consumed by side reactions, and thus the cycle characteristics of the lithium battery may be rapidly deteriorated.

An anode for a lithium battery according to one aspect of an embodiment includes a double layer structure having a protective layer and an anode interlayer, so that deformation and perforation of the protective layer may be suppressed or reduced, and adhesion between the protective layer and the lithium-containing metal precipitated during the charging and discharging process may be maintained to prevent or reduce delamination of the protective layer, so that the formation of lithium dendrite is suppressed or reduced and consumption of the electrolyte is suppressed or reduced, thereby resulting in an improvement of the cycle characteristics of a lithium battery using the anode.

The subject matter of the present disclosure described hereinafter may be modified in various ways, and may have many examples, and thus, certain examples are illustrated in the drawings, and are described in more detail. The present disclosure, however, should not be construed as limited to the example embodiments set forth herein, and rather, should be understood as covering all modifications, equivalents, or alternatives falling within the scope of the present disclosure.

The terms used herein are for the purpose of describing example embodiments only, and are not intended to limit the present disclosure. An expression used in the singular encompasses the expression of the plural, unless it has a clearly different meaning in the context. It will be further understood that the terms "comprises" and/or "comprising," or "includes" and/or "including" if used in this specification, specify the presence of stated features, regions, integers, steps, operations, elements, and/or components, but do not preclude the presence or addition of one or more other features, regions, integers, steps, operations, elements, components, and/or groups thereof. The sign "/" used herein may be interpreted as "and," or as "or" depending on the context.

In the drawings, thicknesses may be magnified and/or exaggerated to clearly illustrate various layers and regions. Like reference numbers may refer to like elements throughout the drawings and the following description. It will be understood that if one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element. Components having substantially the same functional configuration in the present specification and drawings refer to the same reference numerals, and redundant description may not be repeated.

The term "size" of a particle used herein refers to, for example, the "particle diameter" of a particle. The "particle diameter" of a particle represents the average diameter if the particle is spherical, and if the particle is non-spherical, the particle diameter indicates an average major axis length. The particle diameter of the particles may be measured using a particle size analyzer (PSA). The "particle diameter" of a particle may be, for example, the average particle diameter. An average particle diameter may be, for example, a median particle diameter (D50). The median particle diameter (D50) is the size of the particle corresponding to 50% cumulative volume, calculated from the side of the particle with the smaller particle size in the size distribution of the particle as measured, for example, by laser diffraction.

The term "metal" used herein includes both metals and metalloids such as silicon and germanium in an elemental or ionic state.

The term "alloy" used herein refers to a mixture of two or more metals.

The term "cathode active material" used herein refers to a cathode material capable of undergoing lithiation and delithiation.

The term "anode active material" used herein refers to an anode material capable of undergoing lithiation and delithiation.

The terms "lithiation" and "lithiate" used herein refer to a process of adding lithium to a cathode active material or an anode active material.

The terms "delithiation" and "delithiate" used herein refer to a process of removing lithium from a cathode active material or an anode active material.

The terms "charging" and "charge" used herein refer to a process of providing electrochemical energy to a battery.

The term "discharging" and "discharge" used herein refer to a process of removing electrochemical energy from a battery.

The term "cathode" used herein refer to an electrode in which electrochemical reduction and lithiation occur during a discharging process.

The term "anode" used herein refer to an electrode in which electrochemical oxidation and delithiation occurs during the discharge process.

Hereinafter, an anode for a lithium metal battery according to embodiments and a lithium battery including the anode will be described in more detail.

### Anode

An anode for a lithium battery according to embodiments includes: an anode current collectoran anode interlayer on one surface of the anode current collector; and a protective layer on one surface of the node interlayer, wherein the protective layer includes a first polymer and a second polymer, and the first polymer includes a strength-enhanced polymer, the second polymer includes an ion-conductive polymer, and the anode interlayer includes a mixture of first particles including a lithiophilic metal and second particles including a carbon material.

As described above, the anode interlayer includes a mixture of first particles containing lithiophilic metal and second particles containing carbon material. Accordingly, the second particles allow the first particles containing lithiophilic metal to be uniformly (e.g., substantially uniformly) coated on the anode current collector, and the first particles uniformly (e.g., substantially uniformly) coated on the anode current collector induce a lithium-containing metal layer to be uniformly (e.g., substantially uniformly) formed between the double-layer structure including the protective layer and the anode interlayer, and the anode current collector, and strong adhesion is induced between the double-layer structure and the lithium-containing metal layer to prevent or reduce deformation or separation of the protective layer.

In some embodiments, the first particles are uniformly (e.g., substantially uniformly) distributed at the interface between the protective layer and the anode current collector by the second particles, thereby providing the anode interlayer in which the first particles are uniformly (e.g., substantially uniformly) distributed and thus, uniformly (e.g., substantially uniformly) distributing lithium ions at the interface between the anode interlayer and the anode current collector. Accordingly, local current density imbalance between the anode interlayer and the anode current collector is suppressed or reduced, and lithium metal may be uniformly (e.g., substantially uniformly) electrodeposited between the anode interlayer and the anode current collector. Due to the uniform (e.g., substantially uniform) plating of lithium metal between the anode interlayer and the anode current collector, the plating and/or growth of lithium dendrites caused by local current density imbalance between the anode interlayer and the anode current collector may be effectively suppressed or reduced. The inclusion of the first particles and the second particles at the same time results in an increase in the uniformity of lithium ion distribution inside the anode interlayer and/or between the anode interlayer and the anode current collector.

In some embodiments, the anode interlayer including the first particles and the second particles has a higher adhesive strength to the protective layer than the anode current collector, so that the anode current collector and the anode interlayer are separated (and remain separated) during charging and discharging, and lithium ions may more easily flow into a region between the anode current collector and the anode interlayer. Accordingly, a metal layer containing lithium may be more easily formed between the anode current collector and the anode interlayer. In some embodiments, the anode interlayer may improve adhesion between the metal layer containing lithium and the protective layer, thereby preventing or reducing detachment of the protective layer during charging and discharging of a battery.

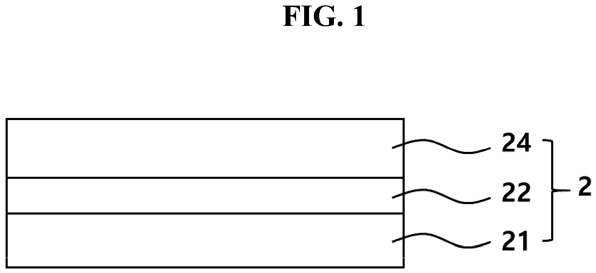

Referring to FIG. 1, an anode 20 includes: an anode current collector 21; a protective layer 24 on the anode current collector 21; and an anode interlayer 22 between the anode current collector 21 and the protective layer 24, wherein the protective layer 24 includes a first polymer including a strength-enhanced polymer and a second polymer including an ion-conductive polymer, and the anode interlayer 22 includes a mixture of first particles containing a lithiophilic metal and second particles containing carbon material.

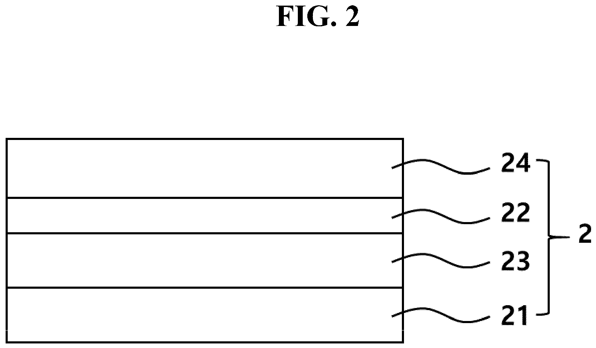

Referring to FIG. 2, the anode 20 includes: the anode current collector 21; the protective layer 24 on the anode current collector 21; the anode interlayer 22 between the anode current collector 21 and the protective layer 24; and a metal layer 23 between the anode interlayer 22 and the anode current collector 21, wherein the protective layer 24 includes a first polymer including a strength-enhanced polymer and a second polymer including an ion-conductive polymer, and the anode interlayer 22 includes a mixture of first particles including a lithiophilic and second particles including a carbon material, and the metal layer 23 includes a lithiophilic metal.

### Anode: anode interlayer

Referring to FIG. 1, the anode 20 may include the anode interlayer 22 between the anode current collector 21 and the protective layer 24. Referring to FIG. 2, the anode 20 may include the anode interlayer 22 between the protective layer 24 and the metal layer 23. Due to the inclusion of the anode interlayer in the anode interlayer 22, generation and/or growth of lithium dendrites in the anode 20 may be more effectively inhibited or reduced.

The anode interlayer 22 may include, for example, a mixture of first particles including lithiophilic metal and second particles including a carbon material.

The lithiophilic metal included in the first particles may be a material capable of lithiation and delithiation. The lithiophilic metal is a metal having the low nucleation overpotential and highly selective nucleation of lithium. The anode interlayer 22 may be formed by introducing a lithium-affinity metal onto the anode current collector 21 through nanoparticle casting. In some embodiments, nanoparticle casting is performed by applying a slurry (dispersion solution), in which the first particles and the second particles are mixed together and dispersed in a solvent, onto the anode current collector 21 utilizing a doctor blade. If the anode interlayer 22 is introduced on the anode current collector 21 through nanoparticle casting, lithium ions penetrate the anode interlayer 22 to form lithium metal between the anode interlayer 22 and the anode current collector 21.

The first particles included in the anode interlayer 22 may be nanoparticles of the lithium-affinity metal. The average particle diameter of the first particles may be, for example, about 10 nm to about 4 µm, about 10 nm to about 1 µm, about 10 nm to about 500 nm, about 10 nm to about 100 nm, or about or 20 nm to about 80 nm. If the first particles have these ranges of average particle diameters, reversible plating and/or dissolution of lithium may be more easily performed during charging and discharging. In some embodiments, due to the first particles having a nano-size, lithium ions penetrate the anode interlayer 22 including the first particles and thus, lithium metal may be plated between the anode current collector 21 and the anode interlayer 22. The average particle diameter of the first particles is, for example, a median diameter (D50) measured using a laser type (or kind) of particle size distribution analyzer.

In some embodiments, the lithiophilic metal may include at least one selected from gold (Au), platinum (Pt), palladium (Pd), silicon (Si), silver (Ag), aluminum (Al), bismuth (Bi), tin (Sn), and zinc (Zn). The lithiophilic metal may include, for example, silver (Ag).

The second particles may uniformly (e.g., substantially uniformly) coat the first particles on the anode current collector 21. The second particles containing a carbon material may uniformly (e.g., substantially uniformly) coat the first particles on the anode current collector 21 so that the first particles may be uniformly (e.g., substantially uniformly) coated on the anode current collector 21. The uniformly (e.g., substantially uniformly) coated first particles allow lithium metal to be uniformly (e.g., substantially uniformly) plated on the anode current collector 21 to prevent or reduce formation of lithium dendrites.

The carbon material may include, for example, amorphous carbon, crystalline carbon, or a combination thereof. The carbon material may include, for example, amorphous carbon. The second particles may include, for example, amorphous carbon, crystalline carbon, or a combination thereof. The second particles may include, for example, amorphous carbon.

The amorphous carbon may include, for example, carbon black (CB), acetylene black (AB), furnace black (FB), ketjen black (KB), graphene, carbon nanotubes, or a combination thereof. The amorphous carbon is carbon that does not have crystallinity or has very low crystallinity, and is distinguished from crystalline carbon or graphite-based carbon.

In some embodiments, the anode interlayer 22 includes a mixture of first particles containing a lithiophilic metal and second particles containing a carbon material, and the first particles are uniformly (e.g., substantially uniformly) coated on the anode current collector 21 through the second particles, and the first particles may allow the lithium metal to be uniformly (e.g., substantially uniformly) plated between the anode interlayer 22 and the anode current collector 21. Accordingly, the formation of lithium dendrites may be suppressed or reduced, and lifespan characteristics of the lithium battery including the anode 20 may be improved. In some embodiments, the anode interlayer 22 firmly attaches the plated lithium metal to the protective layer 24, which will be further described herein below, so that deformation and puncture of the protective layer 24 due to non-uniform precipitation of the lithium metal may be prevented or reduced.

The mixing ratio of the mixture of the first particles and the second particles included in the anode interlayer 22 is a weight ratio, and may be, for example, 10:1 to 1:10, 10:1 to 1:1, 10:1 to 2:1, 5:1 to 1:1, or 5:1 to 2:1.

The anode interlayer 22 may further include a binder. The binder included in the anode interlayer 22 may be, for example, polyacrylic acid, carboxymethylcellulose (CMC), styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, etc., but is not necessarily limited thereto, and may be any suitable binder generally used in the art. The binder may include a single binder or a plurality of different binders. If the anode interlayer 22 does not contain a binder, the anode interlayer 22 may be easily separated from the protective layer 24 or the anode current collector 21. The amount of the binder included in the anode interlayer 22 may be, for example, 55 wt% or less, about 0.1 wt% to about 50 wt%, about 0.1 wt% to about 20 wt%, or about 0.1 wt% to about 10 wt%, based on the total weight of the anode interlayer 22.

The thickness of the anode interlayer may be, for example, about 0.1 µm to about 5 µm, about 0.1 µm to about 3 µm, about 0.5 µm to about 5 µm, about 0.5 µm to about 3 µm, or about 0.5 µm to about 2 µm. If the thickness of the anode interlayer is too small, lithium dendrites formed between the anode interlayer and the anode current collector may collapse the anode interlayer, and cycle characteristics of the lithium battery may not be improved. If the thickness of the anode interlayer is excessively increased, the energy density of a lithium battery using the anode 20 may be decreased and cycle characteristics may not be improved. If the thickness of the anode interlayer is decreased, for example, the charging capacity of the anode interlayer may also be decreased. The charging capacity of the anode interlayer may be, for example, about 0.1% to about 50%, about 1% to about 30%, about 1% to about 10%, about 1% to about 5%, or about 1% to about 2%, of the total charging capacity. If the charging capacity of the anode interlayer is too small, lithium dendrites formed between the anode interlayer and the anode current collector may collapse the anode interlayer, and cycle characteristics of the lithium battery may not be improved. If the charging capacity of the anode interlayer is excessively increased, the energy density of a lithium battery using the anode 20 may be decreased and cycle characteristics may not be improved.

The charging capacity of a cathode active material layer is obtained by multiplying the charging capacity density (mAh/g) of the cathode active material by the mass of the cathode active material in a cathode active material layer. If several types (or kinds) of cathode active materials are used, the equation of the charging capacity density × mass value is applied to each cathode active material, and the sum of these values is the charging capacity of the cathode active material layer.

The charging capacity of the anode interlayer is also calculated in the same way. The charging capacity of the anode interlayer is obtained by multiplying the charging capacity density (mAh/g) of the anode active material by the mass of the anode active material in an anode interlayer. If several types (or kinds) of anode active materials are used, the equation of the charging capacity density × mass value is applied to each anode active material, and the sum of these values is the charging capacity of the anode interlayer. Here, the charging capacity densities of the cathode active material and the anode active material are capacities estimated using an all-solid half-cell using lithium metal as a counter electrode. The charging capacity of the cathode active material layer and the anode interlayer are directly measured by measuring the charging capacity using an all-solid half-cell. If the measured charging capacity is divided by the mass of each active material, the charging capacity density is obtained. In some embodiments, the charging capacity of the cathode active material layer and the anode interlayer may be the initial charging capacity measured at the time of the first cycle charge.

### Anode: protective layer

Referring to FIGS. 1-2, the anode 20 includes: the anode current collector 21; and the protective layer 24 on the anode current collector 21; and the anode interlayer 22 between the anode current collector 21 and the protective layer 24.

The protective layer 24 may include a first polymer including a strength-enhanced polymer and a second polymer including an ion-conductive polymer. If the protective layer 24 does not include the first polymer and the second polymer, the protective layer 24 may be easily separated from the anode interlayer 22 and/or the anode current collector 21.

The first polymer may include a strength-enhanced polymer having a greater elastic modulus than the second polymer. The strength-enhanced polymer has a large modulus of elasticity, and in the process of providing the metal layer 23 between the anode current collector 21 and the anode interlayer 22, even if lithium dendrites are formed as lithium metal is partially plated non-uniformly, the protective layer 24 including the strength-enhanced polymer may be compressed without (or substantially without) deformation on the formed layer 23 and thus, the formation of lithium dendrites can be suppressed or reduced. The elastic modulus of a polymer is defined as the slope of its stress-strain curve in the elastic deformation region

The first polymer may be, for example, a fluorine-based polymer. The fluorine-based polymer may be, for example, polytetrafluoroethylene, polyvinylidene fluoride, and/or a vinylidene fluoride/hexafluoropropylene copolymer. The fluorine-based polymer may include, for example, polyvinylidene fluoride.

The second polymer includes an ion-conductive polymer. Due to the inclusion of the ion-conductive polymer by the protective layer 24, the protective layer 24 may selectively allow lithium ions included in an electrolyte to pass therethrough and effectively suppress or reduce side reactions of organic solvents.

The ion-conductive polymer may include, for example, polyethylene oxide (PEO), polyethylene glycol (PEG), polyacrylonitrile (PAN), polyethylenedioxythiophene (PEDOT), polypyrrole (PPY), polyacrylonitrile (PAN)), polyaniline, polyacetylene, or a combination thereof. The ion-conductive polymer may include, for example, polyethylene oxide (PEO).

The amount of the first polymer may be greater than or equal to the amount of the second polymer. The amount ratio of the first polymer to the second polymer may be, for example, 50:50 to 99:1. If the amount of the first polymer is greater than or equal to the amount of the second polymer, the protective layer 24 has sufficient elastic strength and ionic conductivity and thus the formation of lithium dendrites may be more effectively suppressed or reduced.

The amount ratio of the first polymer to the second polymer may be, for example, 60:40 to 99:1, 70:30 to 99:1, 80:20 to 99:1, or 85:15 to 95:5.

The weight average molecular weight of each of the first polymer and the second polymer may be about 300,000 Dalton to about 1,000,000 Dalton, or about 400,000 Dalton to about 600,000 Dalton. In some embodiments, the weight average molecular weight of the first polymer and the second polymer may be measured using gel permeation chromatography (GPC) on a polystyrene standard sample.

According to another embodiment, the protective layer 24 is free of lithium salt and may be non-porous. The protective layer 24 does not contain a lithium salt, a decrease in the lifespan of the lithium battery due to a side reaction between the lithium salt included in the protective layer 24 and the electrolyte may be prevented or reduced. In some embodiments, the protective layer 24 includes a non-porous structure, and compared to the protective layer 24 having a porous structure, deformation and perforation of the protective layer 24 due to lithium dendrites that may occur during a process in which lithium is plated between the anode interlayer 22 and the anode current collector 21, may be more easily prevented or reduced.

The thickness of the protective layer 24 may be, for example, about 100 nm to about 20 µm, about 500 nm to about 20 µm, about 1 µm to about 20 µm, about 1 µm to about 15 µm, or about 1 µm to about 10 µm. If the protective layer 22 has these ranges of thickness, decomposition of the electrolyte may be effectively suppressed or reduced and an imbalance of local current density may be suppressed or reduced, thereby effectively preventing or reducing the generation and/or growth of lithium dendrites. Accordingly, cycle characteristics of the lithium battery including the protective layer 24 may be further improved. If the thickness of the protective layer 24 is excessively increased, the energy density of the lithium metal battery may be decreased. If the thickness of the protective layer 24 is excessively reduced, improvement in cycle characteristics of the lithium metal battery may be insignificant.

A thickness of the anode interlayer 22 may be smaller than or equal to the thickness of the protective layer 24. The thickness ratio of the anode interlayer 22 to the protective layer 24 may be, for example, 1:1 to 1:20, 1:1 to 1:15, 1:1 to 1:10, 1:1 to 1:5, 1:2 to 1 :20, 1:2 to 1:10, or 1:2 to 1:5. If the thickness of the anode interlayer 22 is smaller than or equal to that of the protective layer 24, the overall structural strength of the anode 20 may be improved and the durability of the anode 20 may be improved.

### Anode: anode current collector

Referring to FIGS. 1-2, the anode 20 includes the anode current collector 21.

The anode current collector 21 may include, for example, indium (In), copper (Cu), magnesium (Mg), stainless steel, titanium (Ti), iron (Fe), cobalt (Co), nickel (Ni), zinc (Zn), aluminum (Al), germanium (Ge), tin (Sn), lithium (Li), and/or alloys and/or conjugates thereof.

The anode current collector 21 may include, for example, a first metal substrate. The first metal substrate may include the first metal as a main component or may consist of the first metal. The amount of the first metal included in the first metal substrate may be, for example, 90 wt% or more, 95 wt% or more, 99 wt% or more, or 99.9 wt% or more, based on the total weight of the first metal substrate. The first metal substrate may include, for example, a material that does not react with lithium, for example, does not form an alloy and/or compound with lithium. The first metal may include, for example, indium (In), copper (Cu), magnesium (Mg), stainless steel, titanium (Ti), iron (Fe), cobalt (Co), nickel (Ni), zinc (Zn), aluminum (Al), germanium (Ge), tin (Sn), lithium (Li), and/or an alloy and/or conjugate thereof. The first metal substrate may include, for example, one selected from the foregoing metals, an alloy of two or more metals, and/or a conjugate of two or more metals. The first metal substrate may be, for example, in the form of a sheet or foil. The thickness of the anode current collector 21 may be, for example, about 5 µm to about 50 µm, about 10 µm to about 50 µm, about 10 µm to about 40 µm, or about 10 µm to about 30 µm, but is not necessarily limited to these ranges. The thickness may vary depending on target characteristics of the lithium battery.

The anode current collector 21 may include, for example, the first metal substrate, and a coating layer on the first metal substrate and including a second metal. The second metal has a higher Mohs hardness than the first metal. The coating layer containing the second metal is harder than the substrate containing the first metal. Therefore, deterioration of the first metal substrate may be prevented or reduced. The Mohs hardness of the material constituting the first metal substrate may be, for example, 5.5 or less. The Mohs hardness of the first metal may be, for example, 5.5 or less, 5.0 or less, 4.5 or less, 4.0 or less, 3.5 or less, or 3.0 or less. The Mohs hardness of the first metal may be, for example, about 2.0 to about 6.0. The coating layer may include the second metal. The coating layer may include the second metal as a main component or may consist of the second metal. The amount of the second metal included in the coating layer may be, for example, 90 wt% or more, 95 wt% or more, 99 wt% or more, or 99.9 wt% or more, based on the total weight of the coating layer. The coating layer may include, for example, a material that does not react with lithium, for example, does not form an alloy and/or compound with lithium. The Mohs hardness of the material constituting the coating layer may be, for example, 6.0 or higher. For example, the Mohs hardness of the second metal may be 6.0 or more, 6.5 or more, 7.0 or more, 7.5 or more, 8.0 or more, 8.5 or more, or 9.0 or more. The Mohs hardness of the second metal may be, for example, 6.0 to 12. If the Mohs hardness of the second metal is too low, it may be difficult to suppress or reduce deterioration of the anode current collector. If the Mohs hardness of the second metal is too high, processing may not be easy (or may be too difficult). The second metal may be, for example, at least one selected from titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may include, for example, one selected from the foregoing metals and/or an alloy of two or more metals thereof. The difference between Mohs hardness of the first metal included in the first metal substrate and Mohs hardness of the second metal included in the coating layer may be, for example, 2 or more, 2.5 or more, 3 or more, 3.5 or more, or 4 or more. If the first metal and the second metal have such a difference in Mohs hardness, deterioration of the anode current collector may be more effectively suppressed or reduced. The coating layer may have a single-layer structure or a multilayer structure of two or more layers. The coating layer may have, for example, a twolayer structure including a first coating layer and a second coating layer. The coating layer may have, for example, a three-layer structure including a first coating layer, a second coating layer, and a third coating layer. The thickness of the coating layer may be, for example, about 10 nm to about 1 µm, about 50 nm to about 500 nm, about 50 nm to about 200 nm, or about 50 nm to about 150 nm. If the thickness of the coating layer is too small, it may be difficult to suppress or reduce non-uniform growth of the lithium-containing metal substrate layer. As the thickness of the coating layer is increased, the cycle characteristics of the lithium battery are improved, but if the coating layer is too thick, the energy density of the lithium battery is reduced and the coating layer may not be easy to form (or may be too difficult to form). The coating layer may be provided on the first metal substrate by, for example, a vacuum deposition method, a sputtering method, a plating method, etc., but the method of providing the coating layer is not necessarily limited to these methods, and any suitable method capable of providing a coating layer generally used in the art may be used herein.

The anode current collector 21 may include, for example, a base film and a metal substrate layer on one or opposite surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combinations thereof. Due to the inclusion of thermoplastic polymers in the base film, the base film may liquefy in the event of a short circuit, thereby inhibiting or reducing a rapid increase in current. In some embodiments, the base film may be an insulator (e.g., an electrical insulator). The metal substrate layer may include, for example, copper (Cu), stainless steel, titanium (Ti), iron (Fe), cobalt (Co), nickel (Ni), and/or an alloy thereof. The metal substrate layer may act as an electrochemical fuse and is cut in the event of overcurrent to perform a short circuit prevention or reduction function. The limit current and the maximum current may be adjusted by adjusting the thickness of the metal substrate layer. The metal substrate layer may be plated and/or deposited on the base film. If the thickness of the metal substrate layer is reduced, the limit current and/or the maximum current of anode current collectors and are reduced, and thus stability of the lithium battery during a short circuit may be improved. A lead tab may be added on the metal substrate layer for external connection. The lead tab may be welded to the metal substrate layer or the metal substrate layer/base film laminate by ultrasonic welding, laser welding, spot welding, and/or the like. During welding, the base film and/or metal substrate layer may melt and the metal substrate layer may be electrically connected to the lead tab. To make welding between the metal substrate layer and the lead tab more robust, a metal chip may be added between the metal substrate layer and the lead tab. The metal chip may be a chip of the same material as the metal of the metal substrate layer. The metal chip may be, for example, metal foil and/or metal mesh. The metal chip may be, for example, aluminum foil, copper foil, and/or SUS foil. By positioning the metal chip on the metal substrate layer and welding the same to the lead tab, the lead tab may be welded to the metal chip/metal substrate layer laminate or the metal chip/metal substrate layer/base film laminate. During welding, the metal substrate layer or the metal substrate layer/metal chip laminate may be electrically connected to the lead tab while the base film, the metal substrate layer, and/or the metal chip are melted. A metal chip and/or lead tab may be added onto a portion of the metal substrate layer. The thickness of the base film may be, for example, about 1 µm to about 50 µm, about 1.5 µm to about 50 µm, about 1.5 µm to about 40 µm, or about 1 µm to about 30 µm. If the base film has these ranges of thickness, the weight of the electrode assembly may be more effectively reduced. The melting point of the base film may be, for example, about 100 °C to about 300 °C, about 100 °C to about 250 °C, or about 100 °C to about 200 °C. If the base film has these ranges of a melting point, the base film may be melted and easily coupled to the lead tab in the process of welding the lead tab. Surface treatment such as corona treatment may be performed on the base film in order to improve adhesion between the base film and the metal substrate layer. The thickness of the metal substrate layer may be, for example, about 0.01 µm to about 3 µm, about 0.1 µm to about 3 µm, about 0.1 µm to about 2 µm, or about 0.1 µm to about 1 µm. If the metal substrate layer has these ranges of thickness, stability of the electrode assembly may be ensured while conductivity (e.g., electrical conductivity) is maintained. The thickness of the metal chip may be, for example, about 2 µm to about 10 µm, about 2 µm to about 7 µm, or about 4 µm to about 6 µm. If the metal chip has these ranges of thickness, connection between the metal substrate layer and the lead tab may be more easily performed. If the anode current collectors and have such a structure, the weight of an electrode may be reduced and, as a result, the energy density may be improved.

In embodiments of the present disclosure, a cathode current collector may include, for example, a base film and a metal substrate layer on one or opposite surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combinations thereof. Due to the inclusion of thermoplastic polymers in the base film, the base film may liquefy in the event of a short circuit, thereby inhibiting or reducing a rapid increase in current. In some embodiments, the base film may be an insulator (e.g., an electrical insulator). The metal substrate layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), and/or alloys and/or conjugates thereof. The cathode current collector may include a metal chip and/or a lead tab. The base film, the metal substrate layer, the metal chip, and the lead tab of the cathode current collector may be understood by referring to the anode current collectors. If the cathode current collector have such a structure, the weight of an electrode may be reduced and, as a result, the energy density may be improved.

### Anode: metal layer

Referring to FIG. 2, the anode 20 may further include the metal layer 23 between the anode current collector 21 and the anode 22. The metal layer 23 may include, for example, a lithiophilic metal.

In some embodiments, the metal layer 23 may include at least one selected from gold (Au), platinum (Pt), palladium (Pd), silicon (Si), silver (Ag), aluminum (Al), bismuth (Bi), tin (Sn), and zinc (Zn). The lithiophilic metal may include, for example, silver (Ag).

The metal layer 23 may include, for example, the lithiophilic metal particles. The metal layer 23 may introduce the lithiophilic metal particles onto the anode current collector 21 by sputtering and/or nanoparticle casting.

The lithiophilic metal particles included in the metal layer 23 may be nanoparticles of the lithiophilic metal. The average particle diameter of the lithiophilic metal particles may be, for example, about 10 nm to about 4 µm, about 10 nm to about 1 µm, about 10 nm to about 500 nm, about 10 nm to about 100 nm, or about 20 nm to about 80 nm. If the lithiophilic metal particles have these ranges of average particle diameters, reversible plating and/or dissolution of lithium may be more easily performed during charging and discharging. The average particle diameter of the lithiophilic metal particles is, for example, a median diameter (D50) measured using a laser type (or kind) of particle size distribution analyzer.

The metal layer 23 may be free of a binder. Due to the absence of the metal layer 23 in a binder, current density may be improved. Accordingly, the total capacity of the lithium battery including the anode 20 including the metal layer 23 may be increased.

### Lithium battery

A lithium battery according to embodiments includes: a cathode; the anode; and an between the cathode and the anode. Lithium batteries can provide improved capacity and excellent lifespan characteristics at the same time by including the anode.

The lithium battery may be, for example, a lithium primary battery, a lithium secondary battery, a lithium-sulfur battery, a lithium-air battery, etc., but is not limited thereto, and may be any suitable lithium battery generally used in the art.

A lithium battery may be manufactured by the following example methods, but is not necessarily limited to this method and may be adjusted according to desired or required conditions.

### Anode

The anode described above is prepared.

### Cathode

First, a cathode active material composition is prepared by mixing together a cathode active material, a conductive agent, a binder, and a solvent. The prepared cathode active material composition is directly coated on an aluminum current collector and dried to prepare a cathode plate having a cathode active material layer formed thereon. In some embodiments, the cathode active material composition may be cast on a separate support, and then a film obtained by peeling from the support is laminated on the aluminum current collector to prepare a cathode plate having a cathode active material layer.

The cathode active material is a lithium-containing metal oxide, and any suitable material generally used in the art may be used without limitation. For example, one or more types (or kinds) of composite oxides of lithium and a metal selected from cobalt, manganese, nickel, and combinations thereof may be used, and an example thereof may be a compound represented by one selected from the following: LiₐA_{1-b}B_{b}D₂ (where 0.90 ≤ a ≤ 1, and 0 ≤ b ≤ 0.5); LiₐE_{i1-b}B_{b}O_{2-c}D_{c} (where 0.90 ≤ a ≤ 1, 0 ≤ b ≤ 0.5, and 0 ≤ c ≤ 0.05); LiE_{2-b}B_{b}O_{4-c}D_{c} (where 0 ≤ b ≤ 0.5, and 0 ≤ c ≤ 0.05); LiₐNi_{1-b-c}Co_{b}B_{c}Dₐ (where 0.90 ≤ a ≤ 1, 0 ≤ b ≤ 0.5, 0 ≤ c ≤ 0.05, and 0 < α ≤ 2); LiₐNi_{1-b-c}Co_{b}B_{c}O₂-_{α}F_{α} (where 0.90 ≤ a ≤ 1, 0 ≤ b ≤ 0.5, 0 ≤ c ≤ 0.05, and 0 < α < 2); LiₐNi_{1-b-c}Co_{b}B_{c}O_{2-α}F₂ (where 0.90 ≤ a ≤ 1, 0 ≤ b ≤ 0.5, 0 ≤ c ≤ 0.05, and 0 < α < 2); LiₐNi_{1-b-c}Mn_{b}B_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Mn_{b}B_{c}O_{2-α}F_{α} (where 0.90 ≤ a ≤ 1, 0 ≤ b ≤ 0.5, and 0 ≤ c ≤ 0.05, 0 < α < 2); LiₐNi_{1-b-c}Mn_{b}B_{c}O_{2-α}F₂ (where 0.90 ≤ a ≤ 1, 0 ≤ b ≤ 0.5, 0 ≤ c ≤ 0.05, and 0 < α < 2); LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1),; LiₐNi_{b}Co_{c}Mn_{d}GₑO₂ (where 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (where 0.90 ≤ a ≤ 1 and 0.001 ≤ b ≤ 0.1); LiₐCoG_{b}O₂ (where 0.90 ≤ a ≤ 1 and 0.001 ≤ b ≤ 0.1); LiₐMnG_{b}O₂ (where 0.90 ≤ a ≤ 1 and 0.001 ≤ b ≤ 0.1); LiₐMn₂G_{b}O₄ (where 0.90 ≤ a ≤ 1 and 0.001 ≤ b ≤ 0.1); QO₂; QS₂; LiQS₂; V₂O₅; LiV₂O₅; LiIO₂; LiNiVO₄; Li_{(3-f})J₂(PO₄)₃(0 ≤ f ≤ 2); Li_{(3-f)}Fe₂(PO₄)₃(0 ≤ f ≤ 2); and LiFePO₄.

In the Formulae representing these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. A compound in which a coating layer is provided on the surface of these compound may be used, and a mixture of these compounds and the compound comprising the coating layer may also be used. The coating layer provided on the surface of these compound may include a coating element compound such as an oxide of the coating element, a hydroxide of the coating element, an oxyhydroxide of the coating element, an oxycarbonate of the coating element, or a hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of providing the coating layer may be selected within a range that does not (or does not substantially) adversely affect the physical properties of the cathode active material. The coating method may be, for example, spray coating, dipping method, and/or the like. A detailed description of the coating method is not necessary here because it should be apparent to those of ordinary skill in the art upon reviewing the present disclosure.

The cathode active material may be represented by, for example, LiₐNiₓCo_{y}M_{z}O_{2-b}A_{b} (1.0≤a≤1.2, 0≤b≤0.2, 0.8≤x<1, 0<y≤0.3, 0<z≤0.3, and x+y+z=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof), LiNiₓCo_{y}Mn_{z}O₂ (0.8≤x≤0.95, 0≤y≤0.2, 0<z≤0.2, and x+y+z=1), LiNiₓCo_{y}Al_{z}O₂ (0.8≤x≤0.95, 0≤y≤0.2, 0<z≤0.2, and x+y+z=1), LiNiₓCo_{y}Mn_{z}Al_{w}O₂ (0.8≤x≤0.95, 0≤y≤0.2, 0<z≤0.2, 0<w≤0.2, and x+y+z+w=1), LiₐCoₓM_{y}O_{2-b}A_{b} (1.0≤a≤1.2, 0≤b≤0.2, 0.9≤x≤1, 0≤y≤0.1, and x+y=1, and M is manganese (Mn), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and A is F, S, Cl, Br, or a combination thereof), LiₐNiₓMn_{y}M'_{z}O_{2-b}A_{b} (1.0≤a≤1.2, 0≤b≤0.2, 0<x≤0.3, 0.5≤y<1, 0<z≤0.3, and x+y+z=1, M" is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof), LiₐM1ₓM2_{y}PO₄-_{b}X_{b} (where 0.90≤a≤1.1, 0≤x≤0.9, 0≤y≤0.5, 0.9<x+y<1.1, and 0≤b≤2, M1 is chromium (Cr), manganese (Mn), iron (Fe), cobalt (Co), nickel (Ni), copper (Cu), zirconium (Zr) or a combination thereof, and M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P or a combination thereof), and LiₐM3_{z}PO₄ (0.90≤a≤1.1, 0.9≤z≤1.1, and M3 is chromium (Cr), manganese (Mn), iron (Fe), cobalt (Co), nickel (Ni), copper (Cu), zirconium (Zr) or a combination thereof).

Examples of the conductive agent include carbon black, graphite particles, natural graphite, artificial graphite, acetylene black, Ketjen black, carbon fiber, carbon nanotubes; metal powders or metal fibers or metal tubes of metal, such as copper, nickel, aluminum, silver; and a conductive polymer such as polyphenylene derivatives are used, but are not limited thereto, and any suitable materials generally used as electrically conductive materials in the art may be used therefor herein. In some embodiments, the cathode may not include, for example, a separate conductive agent.

The binder may be a vinylidene fluoride/hexafluoropropylene copolymer, polyvinylidene fluoride, polyacrylonitrile, polymethyl methacrylate, polytetrafluoroethylene (PTFE), a mixture of these polymers, a styrene butadiene rubber-based polymer, etc. The solvent may be N-methylpyrrolidone (NMP), acetone, water, etc. However, the binder and the solvent are not limited thereto, and may be any suitable binder and/or solvent that is generally used in the art.

A plasticizer or a pore forming agent may be added to the cathode active material composition to form pores in an electrode plate.

The amounts of the cathode active material, the conductive agent, the binder, and the solvent used for the cathode are at any suitable levels that are generally used in lithium batteries. Depending on the use and configuration of the lithium battery, one or more of the conductive agent, the binder, and the solvent may be omitted.

The amount of binder included in the cathode may be about 0.1 wt% to about 10 wt% or about 0.1 wt% to about 5 wt%, of the total weight of the cathode active material layer. The amount of the cathode active material included in the cathode may be about 80 wt% to about 99 wt%, about 90 wt% to about 99 wt%, or about 95 wt% to about 99 wt%, of the total weight of the cathode active material layer.

### Separator

Next, a separator to be inserted between the cathode and the anode is prepared.

As for the separator, any suitable one that is generally used in a lithium battery can be used. As the separator, for example, any suitable separator that has low resistance to ion migration of an electrolyte and excellent liquid electrolyte-wetting ability, may be used. The separator may be a non-woven fabric and/or a woven fabric including at least one selected from fiberglass, polyester, Teflon, polyethylene, polypropylene, polytetrafluoroethylene (PTFE), and a combination thereof. For lithium-ion batteries, separators that can be wound, such as polyethylene and polypropylene, may be used, and for lithium-ion polymer batteries, separators with excellent organic liquid electrolyte-wetting ability may be used.

The separator is manufactured by the following example method, but the disclosure is not necessarily limited to this method and may be adjusted according to desired or required conditions.

First, a separator composition is prepared by mixing together a polymer resin, a filler, and a solvent. The separator composition is directly coated and dried on the electrode to form a separator. In some embodiments, after a separator composition is cast and dried on a support, a separator film peeled off from the support is laminated on the electrode to form a separator.

The polymer used to manufacture the separator is not particularly limited, and any suitable polymer generally used in the art for the binder of an electrode plate may be used. For example, a vinylidene fluoride/hexafluoropropylene copolymer, polyvinylidene fluoride (PVDF), polyacrylonitrile, polymethyl methacrylate, or mixtures thereof may be used.

### Electrolyte

Next, an electrolyte is prepared.

The electrolyte may be, for example, a liquid electrolyte, a solid electrolyte, a gel electrolyte, or a combination thereof.

The electrolyte may be, for example, an organic liquid electrolyte. In embodiments, the organic liquid electrolyte may be prepared by dissolving a lithium salt in an organic solvent.

Any suitable organic solvent that can be used as an organic solvent in the art, may be used as the organic solvent herein. The organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

Any suitable lithium salt may be used as long as it is generally used as a lithium salt in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (1≤x≤20, 1≤y≤20), LiCl, Lil, or a mixture thereof. The concentration of the lithium salt may be, for example, about 0.1 M to about 5.0 M.

The solid electrolyte may be, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may be at least one selected from Pb(Zr,Ti)O₃ (PZT), Pb₁₋ₓLaₓZr_{1-y} Ti_{y}O₃(PLZT)(O≤x<1, O≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂ (0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, and x is an integer from 1 to 10). The solid electrolyte may be produced by, for example, a sintering method and/or the like. For example, the oxide-based solid electrolyte may be a garnet system selected from Li₇La₃Zr₂O₁₂ (LLZO) and Li₃₊ₓLa₃Zr₂₋ₐMₐO₁₂ (M doped LLZO, M=Ga, W, Nb, Ta, or Al, and x is an integer from 1 to 10).

The sulfide-based solid electrolyte may include, for example, lithium sulfide, silicon sulfide, phosphorus sulfide, boron sulfide, or a combination thereof. The sulfide-based solid electrolyte particles may include Li₂S, P₂S₅, SiS₂, GeS₂, B₂S₃, or a combination thereof. The sulfide-based solid electrolyte particles may be Li₂S and/or P₂S₅. Sulfide-based solid electrolyte particles have higher lithium ion conductivity than other inorganic compounds. For example, sulfide-based solid electrolytes include Li₂S and P₂S₅. If the sulfide solid electrolyte material constituting the sulfide-based solid electrolyte includes Li₂S-P₂S₅, the mixed molar ratio of Li₂S to P₂S₅ may be, for example, in the range of about 50:50 to about 90:10. In some embodiments, an inorganic solid electrolyte, prepared by adding Li₃PO₄, halogen, a halogen compound, Li₂₊₂ₓZn₁₋ₓGeO₄ ("LISICON," 0≤x<1), Li_{3+y}PO₄₋ₓNₓ ("LIPON," 0<x<4, 0<y<3), Li_{3.25}Ge_{0.25}P_{0.75}S₄ ("ThioLISICON"), Li₂O-Al₂O₃-TiO₂-P₂O₅ ("LATP") to Li₂S-P₂S₅, SiS₂, GeS₂, B₂S₃, or a combination thereof, may be used as a sulfide solid electrolyte. Nonlimiting examples of sulfide solid electrolyte materials include Li₂S-P₂S₅; Li₂S-P₂S₅-LiX (X=halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-Lil; Li₂S-SiS₂-P₂S₅-LiI; Li₂S-B₂S₃; Li₂S - P₂S₅-ZₘSₙ (0<m<10, 0<n<10, Z=Ge, Zn, or Ga); Li₂S-GeS₂; Li₂S-SiS₂-Li₃PO₄; and Li₂S-SiS₂-Li_{P}MO_{q} (0<p<10, 0<q<10, M=P, Si, Ge, B, Al, Ga, or In). In this regard, the sulfide-based solid electrolyte material may be prepared by treating raw starting materials (e.g., Li₂S, P₂S₅, etc.) of the sulfide-based solid electrolyte material by a melt quenching method, a mechanical milling method, and/or the like. In some embodiments, calcinations may be performed after the treatment. The sulfide-based solid electrolyte may be amorphous, crystalline, or a mixture thereof.

The polymer solid electrolyte may be, for example, an electrolyte containing a mixture of a lithium salt and a polymer or a polymer having an ion conductive functional group. The polymer solid electrolyte may be, for example, a polymer electrolyte that does not contain a liquid electrolyte. Polymers included in the polymer solid electrolyte include, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethyleneoxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgan ADP, sulfonated poly(ether ether ketone) (SPEEK), sulfonated poly(arylene ether ketone ketone) (SPAEKKS), sulfonated poly(aryl ether ketone) SPAEK), poly[bis(benzimidazobenzisoquinolinones)] (SPBIBI), poly(styrene sulfonate) (PSS), lithium 9,10-diphenylanthracene-2-sulfonate, DPASLi⁺), or a combination thereof, but is not limited thereto, and any suitable material generally used as a polymer electrolyte in the art may be used herein. Any suitable lithium salt can be used as long as the lithium salt can be used as a lithium salt in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are each from 1 to 20), LiCl, Lil, or a mixture thereof.

A gel electrolyte is, for example, a gel polymer electrolyte. In some embodiments, the gel polymer electrolyte may be an electrolyte including a liquid electrolyte and a polymer or an electrolyte including an organic solvent and a polymer having an ion conductive functional group. The liquid electrolyte may be, for example, an ionic liquid, a mixture of a lithium salt and an organic solvent, a mixture of an ionic liquid and an organic solvent, or a mixture of a lithium salt, an ionic liquid and an organic solvent. The polymer may be selected from polymers used in solid polymer electrolytes. The organic solvent may be selected from organic solvents used for liquid electrolytes. The lithium salt may be selected from lithium salts used in solid polymer electrolytes. The ionic liquid refers to a salt that is in a liquid state at room temperature or a molten salt at room temperature, which has a melting point below room temperature and consists only of ions. In some embodiments, the ionic liquid may be at least one selected from compounds including: a) at least one cation selected from ammonium, pyrrolidinium, pyridinium, pyrimidinium, imidazolium, piperidinium, pyrazolium, oxazolium, pyridazinium, phosphonium, sulfonium, triazolium, and a mixture thereof, and b) at least one anion selected from BF₄⁻, PF₆⁻, AsF₆⁻, SbF₆⁻, AlCl₄⁻ , HSO₄⁻, ClO₄⁻, CH₃SO₃⁻, CF₃CO₂⁻, Cl⁻, Br, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. A polymer solid electrolyte may be formed by wetting a polymer solid electrolyte with a liquid electrolyte in a lithium battery. The gel electrolyte may further include inorganic particles.

### Lithium battery

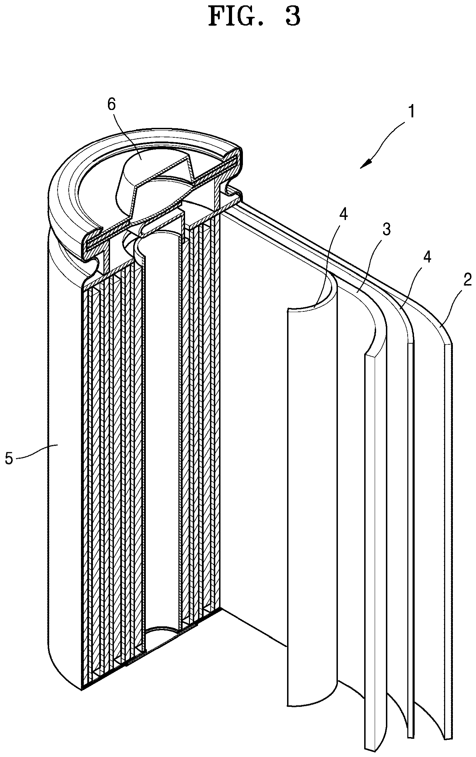

Referring to FIG. 3, a lithium battery 1 according to embodiments includes a cathode 3, the anode 2 as described above, and a separator 4. The cathode 3, the anode 2, and the separator 4 may be wound or folded and accommodated in a battery case 5. An organic liquid electrolyte is injected into the battery case 5 and sealed with a cap assembly 6 to complete the manufacture of the lithium battery 1. The battery case 5 may be cylindrical, but not necessarily limited to such a shape and may be, for example, a prismatic shape, a thin film shape, and/or the like.

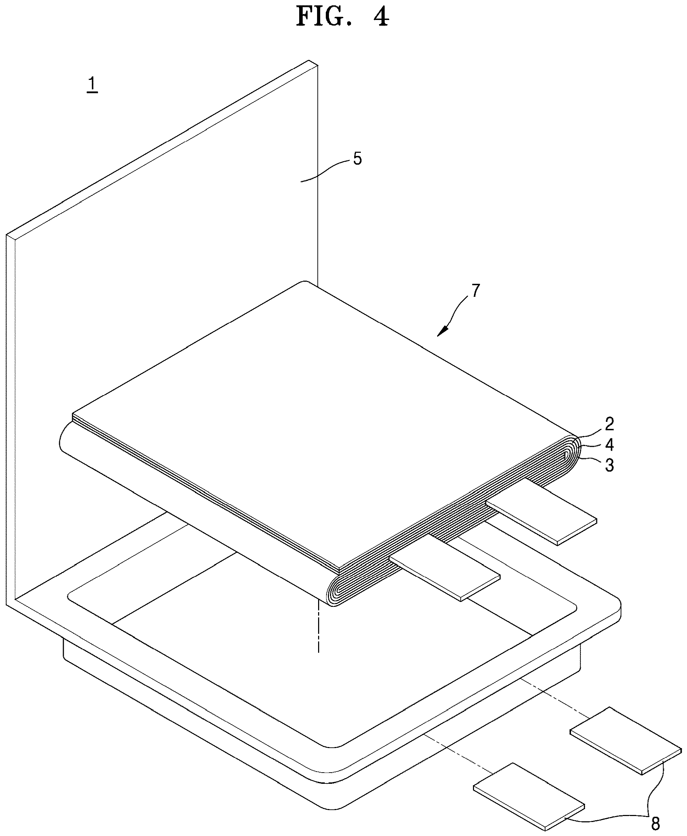

Referring to FIG. 4, a lithium battery 1 according to embodiments includes a cathode 3, the anode 2 described above, and a separator 4. The separator 4 may be between the cathode 3 and the anode 2, and the cathode 3, the anode 2, and the separator 4 may be wound or folded to form a battery structure 7. The battery structure 7 is accommodated in a battery case 5. An electrode tab 8 acting as an electrical path for inducing the current formed in the battery structure 7 to the outside may be included. An organic liquid electrolyte is injected into the battery case 5 and sealed to complete the manufacture of the lithium battery 1. The battery case 5 may have a rectangular shape, but is not necessarily limited to such a shape, and may have, for example, a cylindrical shape, a thin film shape, and/or the like.

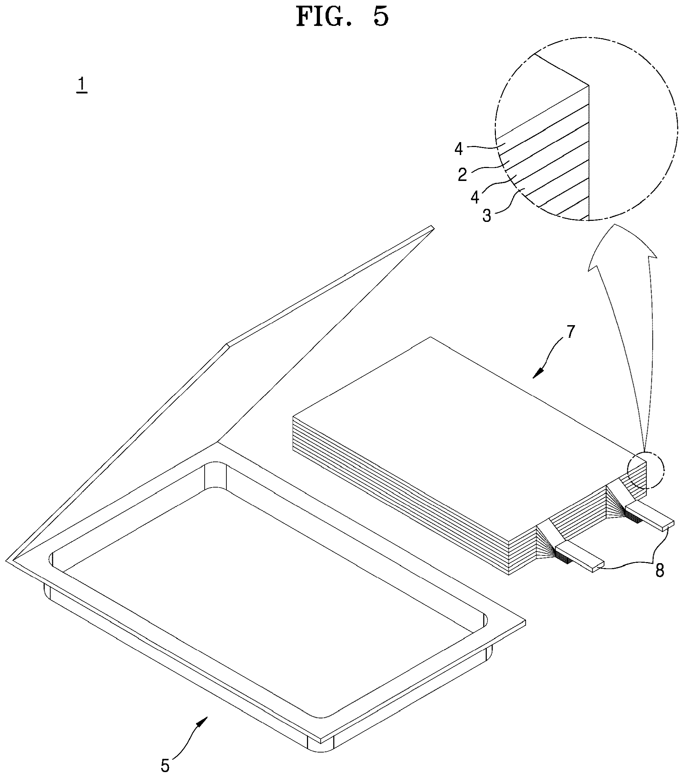

Referring to FIG. 5, a lithium battery 1 according to embodiments includes a cathode 3, the anode 2 described above, and a separator 4. The separator 4 is between the cathode 3 and the anode 2 to form a battery structure 7. The battery structure 7 is stacked in a bi-cell structure, and then accommodated in the battery case 5. An electrode tab 8 acting as an electrical path for inducing the current formed in the battery structure 7 to the outside may be included. An organic liquid electrolyte is injected into the battery case 5 and sealed to complete the manufacture of the lithium battery 1. The battery case 5 may have a rectangular shape, but is not necessarily limited to such a shape, and may have, for example, a cylindrical shape, a thin film type (or kind), and/or the like.

The pouch type (or kind) of lithium battery corresponds to those using a pouch as a battery case in the lithium batteries of FIGS. 3-5. A pouch type (or kind) of lithium battery may include one or more battery structures. A separator is between a cathode and an anode to form a cell structure. After the battery structure is stacked in a bi-cell structure, the resultant structure is wet by an organic liquid electrolyte, and then, housed and sealed by a pouch, thereby completing the manufacture of a pouchtype lithium battery. For example, the cathode, the anode, and the separator may be simply stacked and accommodated in the form of an electrode assembly in a pouch. In embodiments, the cathode, the anode, and the separator may be wound or folded into an electrode assembly in the form of a jelly roll, and then, accommodated in the pouch. Then, an organic liquid electrolyte is injected into the pouch, which was then sealed to complete the manufacture of the lithium battery.

Lithium batteries have excellent lifespan characteristics and high rate characteristics. Due to these characteristics, lithium batteries are used, for example, in electric vehicles (Evs). For example, the lithium batteries are used for hybrid vehicles such as plug-in hybrid electric vehicles (PHEVs). The lithium batteries are also used in fields utilizing or requiring large amounts of power storage. For example, the lithium batteries are used for electric bicycles, power tools, etc.

A plurality of lithium batteries are stacked to form a battery module, and a plurality of battery modules may form a battery pack. Such a battery pack may be used in any suitable device utilizing high capacity and high output. For example, the battery pack may be used for laptops, smartphones, electric vehicles, etc. The battery module may include, for example, a plurality of batteries and a frame for holding the same. The battery pack may include, for example, a plurality of battery modules and a bus bar connecting the same. The battery module and/or battery pack may further include a cooling device. A plurality of battery packs may be controlled by a battery management system. The battery management system may include a battery pack and a battery control device connected to the battery pack.

### Anode manufacturing method

An anode manufacturing method according to another embodiment includes: providing an anode current collector; providing an anode interlayer on the anode current collector; and providing a protective layer on the anode interlayer, wherein the anode interlayer includes a mixture of first particles including a lithiophilic metal and second particles including a carbon material, and the protective layer includes a first polymer containing a strength-enhanced polymer and a second polymer containing an ion-conductive polymer. A lithium battery including an anode manufactured in this way provides improved cycle characteristics.

First, an anode current collector is provided. The anode current collector may be understood by referring to the description provided in connection with the anode described above. For example, copper foil is provided as an anode current collector.

Next, an anode interlayer is provided on the anode current collector. The anode interlayer may be provided on the anode current collector through, for example, a nanoparticle casting method. In some embodiments, the anode interlayer may be provided by preparing a first slurry by mixing first particles and second particles together with a solvent, coating the first slurry on an anode current collector, and drying the first slurry. The first particles and the second particles may be understood by referring to the description provided in connection with the anode described above. The solvent may be water or an organic solvent. The solvent may be, for example, N,N-dimethylacetamide, N-methylpyrrolidone (NMP), etc., but is not necessarily limited thereto, and may be any suitable solvent that is generally used in the art.

Next, a protective layer is provided on the anode interlayer. The protective layer may be provided by, for example, preparing a second slurry by mixing together a first polymer, a second polymer, and a solvent, coating the second slurry on the anode interlayer, and drying the second slurry. The coating method is not particularly limited and may be coated using a doctor blade and/or the like. The first polymer and the second polymer may be understood by referring to the description provided in connection with the anode described above. The solvent may be an organic solvent. The solvent may be, for example, N,N-dimethylacetamide, N-methylpyrrolidone (NMP), etc., but is not necessarily limited thereto, and may be any suitable solvent that is generally used in the art.

The anode manufacturing method may further include introducing a metal layer between the anode interlayer and the anode current collector. The metal layer may include, for example, a lithiophilic metal. The metal layer may include, for example, lithiophilic metal particles.

A method of introducing the metal layer between the anode interlayer and the anode current collector may be the same as the method of introducing the anode interlayer. For example, a metal layer may be on the anode current collector before the anode interlayer is provided on the anode current collector. A method of providing the metal layer on the anode current collector may be the same as a method of providing an anode interlayer on the anode current collector. For example, a metal layer including lithiophilic metal particles may be provided on a metal substrate by a nanoparticle casting method. In some embodiments, a laminate may be prepared by coating and drying, on a metal substrate, a lithiophilic metal particle composition which does not contain a binder.

Through the following Examples and Comparative Examples, embodiments of the present disclosure will be explained in more detail. However, these examples are intended to illustrate embodiments of the present disclosure, and the scope of the present disclosure is not limited thereto.

### Manufacture of anode and lithium metal battery

### Example 1: Cu substrate/anode interlayer (Ag+C, 1:3)/protective layer (PVDF+PEO, 9:1)

### Anode manufacturing

The Ag nanoparticles and carbon black were mixed together in a 1:3 weight ratio, and added after mixing together with distilled water such that the weight of the polyacrylic acid binder was 50 wt% with respect to the total weight of solids, and dispersed by stirring using a Thinky mixer at 60 °C overnight to prepare the first slurry.

The first slurry was coated on a copper (Cu) current collector having a thickness of 10 µm using a nanoparticle casting method, and then the solvent was removed at 65 °C for 6 hours to introduce an anode interlayer.

Polyvinylidene fluoride (PVDF) (Sigma-Aldrich, average Mw 534,000 by GPC) powder and polyethylene oxide (PEO) powder were added in a 9:1 weight ratio to N-methylpyrrolidone (NMP, 99%, Sigma-Aldrich), and then, stirred overnight using a stirring bar at 60 °C to prepare a second slurry.

The second slurry was coated on the anode interlayer using a doctor blade, and then, the solvent was removed at 60 °C for 6 hours to introduce a protective layer.

An anode having a structure of anode current collector/anode interlayer/protective layer was prepared.

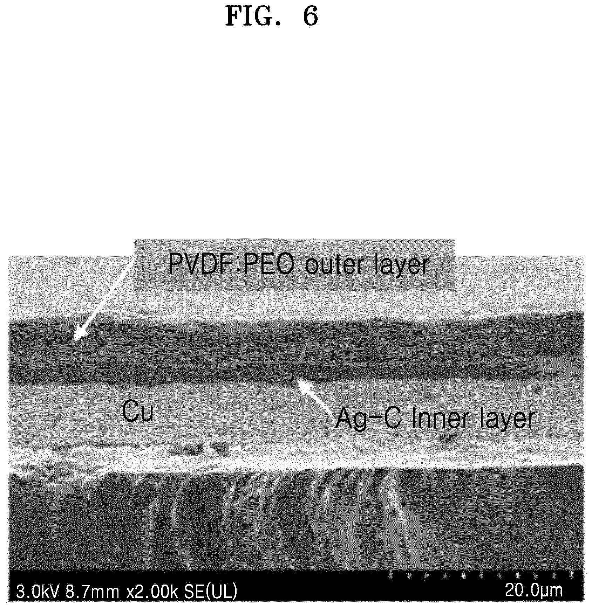

A scanning electron microscope (SEM) image of a cross section of the prepared anode is shown in FIG. 6.

As shown in FIG. 6, it was confirmed that the protective layer having a double layer structure, in which the anode interlayer was on the copper current collector and the protective layer was on the anode interlayer, is provided.

The thickness of the anode interlayer was 3 µm, and the thickness of the protective layer was 6 µm.

### Manufacture of coin cells

A coin cell was prepared by using lithium foil having a thickness of 20 µm as a counter electrode, placing a polypropylene separator (separator, Celgard 3510) between the counter electrode and the anode, and injecting electrolyte.

As an electrolyte, a solution in which 0.6M LiBF₄ and 0.6M LiDFOB were dissolved in FEC (fluoroethylene carbonate) + DEC (diethyl carbonate) (1:2 volume ratio) was used.

### Example 2: Cu substrate/anode interlayer (AgNP+C, 1:3)/protective layer (PVDF+PEO, 8:2)

An anode and a coin cell were manufactured in substantially the same manner as in Example 1, except that the weight ratio of PVDF to PEO included in the protective layer was changed to 8:2.

### Example 3: Cu substrate/anode interlayer (AgNP+C, 1:3)/protective layer (PVDF+PEO, 7:3)

An anode and a coin cell were manufactured in substantially the same manner as in Example 1, except that the weight ratio of PVDF to PEO included in the protective layer was changed to 7:3.

### Example 4: Cu substrate/anode interlayer (AgNP+C, 1:3)/protective layer (PVDF+PEO, 6:4)

An anode and a coin cell were manufactured in substantially the same manner as in Example 1, except that the weight ratio of PVDF to PEO included in the protective layer was changed to 6:4.

### Example 5: Cu substrate/anode interlayer (AgNP+C, 1:3)/protective layer (PVDF+PEO, 5:5)

An anode and a coin cell were manufactured in substantially the same manner as in Example 1, except that the weight ratio of PVDF to PEO included in the protective layer was changed to 5:5.

### Example 6: Cu substrate/anode interlayer (AgNP+C, 1:2)/protective layer (PVDF+PEO, 9:1)

An anode and a coin cell were manufactured in substantially the same manner as Example 1, except that the weight ratio of Ag nanoparticles to carbon black included in the anode interlayer was changed to be 1:2.

### Example 7: Cu substrate/anode interlayer (AgNP+C, 1:1)/protective layer (PVDF+PEO, 9:1)

An anode and a coin cell were manufactured in substantially the same manner as Example 1, except that the weight ratio of Ag nanoparticles to carbon black included in the anode interlayer was changed to be 1:1.

### Example 8: Cu substrate/anode interlayer (AgNP+C, 2:1)/protective layer (PVDF+PEO, 9:1)

An anode and a coin cell were manufactured in substantially the same manner as Example 1, except that the weight ratio of Ag nanoparticles to carbon black included in the anode interlayer was changed to be 2:1.

### Comparative Example 1: Cu substrate/protective layer (PVDF+PEO, 9:1)

An anode and a coin cell were manufactured in substantially the same manner as in Example 1, except that the anode interlayer was not applied.

### Comparative Example 2: Cu substrate/first anode interlayer (AgNP)/second anode interlayer (C)/protective layer (PVDF+PEO, 9:1)

An anode and a coin cell were manufactured in substantially the same way as in Example 1, except that instead of introducing a 3:1 mixture of Ag nanoparticles and carbon black on the anode current collector, a first anode interlayer containing Ag nanoparticles and a second anode interlayer containing carbon black were applied.

### Comparative Example 3: Cu substrate/anode interlayer (AgNP)/protective layer (PVDF+PEO, 9:1)

An anode and a coin cell were manufactured in substantially the same manner as in Example 1, except that the anode interlayer contained only Ag nanoparticles and did not contain carbon black.

### Comparative Example 4: Cu substrate/ anode interlayer (AgNP+C, 1:3)/protective layer (PVDF alone)

An anode and a coin cell were manufactured in substantially the same manner as in Example 1, except that the protective layer contained PVDF alone.

### Evaluation Example 1: Charge/discharge test

The lithium batteries prepared in Examples 1 to 8 and Comparative Examples 1 to 4 were charged at a constant current of 1.0 mAh/cm² at a current density of 0.5 mA/cm² at 25 °C. Subsequently, discharge was performed at a constant current of 0.1 mA/cm² until the voltage reached 1.0 V (vs. Li).

This cycle was repeated under the same conditions until the 10^{th} cycle.

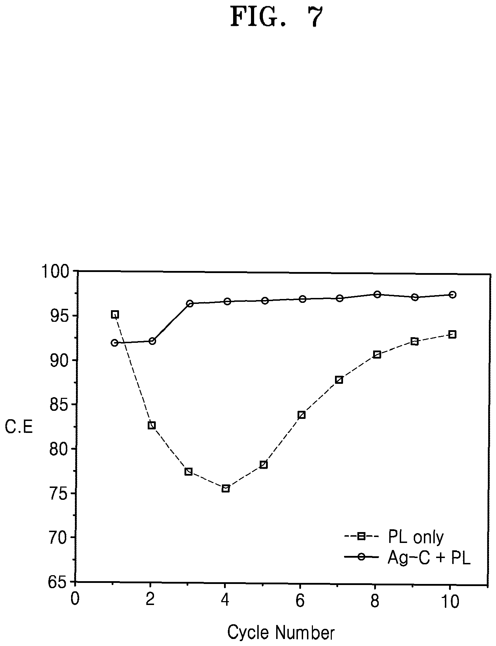

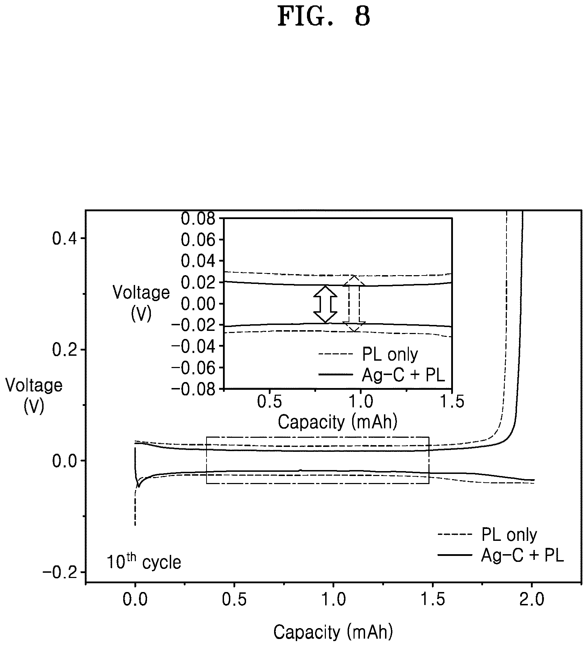

In all charge/discharge cycles, a 10-minute stop time was provided after every charge/discharge cycle. From among the room temperature charge and discharge test results, the results of Example 1 and Comparative Example 1 are shown in FIGS. 7-8. In addition, the results of Examples 1 to 8 and Comparative Examples 1 to 4 are shown in Table 1 below. The charge/discharge efficiency is defined by Equation 1 below.

The charge/discharge efficiency and overpotential values after the 10^{th} cycle are shown in Table 1 below. Charge/discharge efficiency [%] = [discharging capacity in Nth cycle / charging capacity in Nth cycle] × 100

**Table 1**

| | Anode interlayer/protective layer | 10^{th} charge/discharge efficiency | Overpotential |
|---|---|---|---|
| Example 1 | Ag+C, 1:3 / PVDF+PEO, 9:1 | 97.68% | 19.01 mV |
| Example 2 | Ag+C, 1:3 / PVDF+PEO, 8:2 | 96.33% | 21.72mV |
| Example 3 | Ag+C, 1:3 / PVDF+PEO, 7:3 | 94.97% | 20.60 mV |
| Example 4 | Ag+C, 1:3 / PVDF+PEO, 6:4 | 91.5% | 20.8 mV |
| Example 5 | Ag+C, 1:3 / PVDF+PEO, 5:5 | 91.81% | 19.35 mV |
| Example 6 | Ag+C, 1:2 / PVDF+PEO, 9:1 | 97.01% | 20.44 mV |
| Example 7 | Ag+C, 1:1 / PVDF+PEO, 9:1 | 96.88% | 19.93mV |
| Example 8 | Ag+C, 2:1 / PVDF+PEO, 9:1 | 97.77% | 24.05 mV |
| Comparative Example 1 | -/ PVDF+PEO, 9:1 | 93.22% | 70.46mV |
| Comparative Example 2 | AgNP/C/PVDF+PEO, 9:1 | 90.14% | 22.56 mV |
| Comparative Example 3 | AgNP/PVDF+PEO, 9:1 | 83.35% | 25.4 mV |
| Comparative Example 4 | Ag+C, 1:3 / PVDF alone | 92.89% | 48.8 mV |

As shown in FIGS. 7-8 and Table 1, the lithium batteries of Examples 1 to 8 have improved charge/discharge efficiency and reduced overpotential values compared to the lithium batteries of Comparative Examples 1 to 3.

These improved lifespan characteristics and overpotential reduction effect of the lithium batteries of Examples 1 to 8 may be obtained due to the suppression or reduction of side reactions caused by the decomposition of solvents on the anode surface, and suppression or reduction of localized current density imbalances, which are caused by a double-layer structure including: an anode interlayer containing AgNP and carbon black; and a protective layer containing PVDF and PEO.

In the lithium batteries of Comparative Examples 1 to 4, it can be seen that the protective layer and the anode interlayer could not effectively suppress or reduce side reactions with the solvent and/or the local current density imbalance.

Example embodiments have been described in more detail with reference to the accompanying drawings, but the present disclosure is not limited to these examples. It should be apparent that a person with ordinary knowledge in the technical field, to which this disclosure belongs, can derive various examples of changes or modifications within the scope of the technical idea described in the appended claims, and these are within the technical scope of this disclosure.

According to one aspect of an embodiment, a lithium battery with improved cycle characteristics can be provided due to the inclusion of an anode having a double-layer structure of a protective layer and an anode interlayer.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the present disclosure as defined by the following claims, and equivalents thereof.

## Claims

1. An anode (20) comprising:
an anode current collector (21);
an anode interlayer (22) on one surface of the anode current collector (21); and
a protective layer (240 on the anode interlayer (22), wherein:
the protective layer (24) comprises a first polymer and a second polymer, wherein the first polymer comprises a strength-enhanced polymer, and the second polymer comprises an ion-conductive polymer, and
the anode interlayer (22) comprises a mixture comprising first particles and second particles, wherein the first particles contain a lithiophilic metal, and the second particles contain a carbon material.

2. The anode (20) as claimed in claim 1, wherein:
the lithiophilic metal comprises gold (Au), platinum (Pt), palladium (Pd), silicon (Si), silver (Ag), aluminum (Al), bismuth (Bi), tin (Sn), magnesium (Mg), zinc (Zn), or a combination thereof.

3. The anode (20) as claimed in claim 1 or 2, wherein:
the carbon material comprise amorphous carbon, crystalline carbon, or a combination thereof.

4. The anode (20) as claimed in any of the claims 1 to 3, wherein:
an amount ratio of the first particles to the second particles is 5:1 to 1:5.

5. The anode (20) as claimed in any of the claims 1 to 4, wherein:
the anode interlayer (22) further comprises a binder.

6. The anode (20) as claimed in any of the claims 1 to 5, wherein:
the strength-enhanced polymer has an elastic modulus greater than that of the second polymer.

7. The anode (20) as claimed in any of the claims 1 to 6, wherein:
the strength-enhanced polymer comprises a fluorine-based polymer.

8. The anode (20) as claimed in any of the claims 1 to 7, wherein:
the fluorine-based polymer comprises polytetrafluoroethylene (PTFE), polyvinylidene fluoride (PVDF), a polyvinylidene fluoride-hexafluoropropylene copolymer (PVDF-HFP), polyvinyl fluoride (PVF), or a combination thereof.

9. The anode (20) as claimed in any of the claims 1 to 8, wherein:
the ion-conductive polymer comprises polyethylene oxide (PEO), polyethylene glycol (PEG), polyacrylonitrile (PAN), polyethylenedioxythiophene (PEDOT), polypyrrole (PPY), polyacrylonitrile (PAN), polyaniline, polyacetylene, or a combination thereof.

10. The anode (20) as claimed in any of the claims 1 to 9, wherein:
an amount of the first polymer is greater than or equal to an amount of the second polymer.

11. The anode (20) as claimed in any of the claims 1 to 10, wherein:
the protective layer (24) is free of lithium salt and is non-porous.

12. The anode (20) as claimed in any of the claims 1 to 11, wherein:
a thickness of the protective layer (24) is 100 nm to 20 µm
or
a thickness of the anode interlayer (22) is 0.1 µm to 5 µm
or
a thickness ratio of the anode interlayer (22) to the protective layer (24) is 1:1 to 1:20.

13. The anode (20) as claimed in any of the claims 1 to 12, wherein:
the anode current collector (21) comprises indium (In), copper (Cu), magnesium (Mg), stainless steel, titanium (Ti), iron (Fe), cobalt (Co), nickel (Ni), zinc (Zn), aluminum (Al), germanium (Ge), tin (Sn), lithium (Li), or an alloy or conjugate thereof
or the anode current collector (21) comprises a base film and a metal substrate layer on one or opposite surfaces of the base film,
the base film comprises a polymer, and the polymer comprises polyethylene terephthalate (PET), polyethylene (PE), polypropylene (PP), polybutylene terephthalate (PBT), polyimide (PI), or a combination thereof, and
the metal substrate layer comprises indium (In), copper (Cu), magnesium (Mg), stainless steel, titanium (Ti), iron (Fe), cobalt (Co), nickel (Ni), zinc (Zn), aluminum (Al), germanium (Ge), tin (Sn), lithium (Li), or an alloy or conjugate thereof.

14. The anode (20) as claimed in any of the claims 1 to 13, further comprising:
a metal layer (23) between the anode current collector (21) and the anode interlayer (22)
wherein the metal layer (23) is free of a binder.

15. A lithium battery (1) comprising:
a cathode (3);
the anode (20) according to any of the claims 1 to 14; and
an electrolyte between the cathode (3) and the anode (20)
wherein the electrolyte is a liquid electrolyte, a solid electrolyte, a gel electrolyte, or a combination thereof.
